# EUROPEAN PATENT SPECIFICATION

(11) **EP 1 903 317 B1**
(45) Date of publication and mention of the grant of the patent: **20.03.2013**
(21) Application number: 07253411.8
(22) Date of filing: 30.08.2007
(51) Int. Cl.: G01D 9/00, G01D 4/00

(54) **Data and event logging**
Daten- und Ereignisprotokollierung
Journalisation de données et d'événements

(30) Priority: 30.08.2006 GB 0617105
(43) Date of publication of application: 26.03.2008
(73) Proprietor: Secure International Holdings Pte. Ltd., Singapore 048693 (SG)
(72) Inventor: James, Andrew, Winchester Hampshire, SO23 8BA (GB)
(74) Representative: Jennings, Michael John

(56) References cited:
- US-A- 5 791 063

## Description

The present invention relates to data and event logging and particularly to data and event logging in devices which monitor the occurrence of an event over a period of time. In particular, the invention can be applied to utility meters and replaces real time clocks to monitor the time and provide a reading of the consumption of a utility such as electricity on a regular interval.

The following description will primarily refer to utility meters such as those which monitor electricity consumption after certain periods of time. However the invention can be utilised in any type of device which logs an event or data against a time varying parameter.

Utility meters such as digital utility meters conventionally comprise a crystal based real time clock to monitor the elapsing of time. A real time clock is useful in that it can be used to tag events which have occurred with timestamps, for example, in a utility meter the occurrence of a tamper can be time stamped. Furthermore they can be used to provide load profiles over a certain period of time, or the voltage over time.

The problem with real time clocks is that they are battery backed and the presence of a battery will also result in the requirement for replacement after a certain period of time. The life of a battery for a real time clock is typically 10 to 15 years and the replacement of the battery can be expensive.

US 5,791,063 teaches a method and apparatus for locating a train or a track repair vehicle along the track, or to locate accurately a track defect. When measuring track geometry, i.e. gage, cross level, warp, the measuring device moves along the track and senses and stores a historical profile of various track geometry parameters. The historical profile is stored in a form usable in a processor in the geometry measuring equipment on a train or repair vehicle. The vehicle is run for a set distance to generate a real time profile which is correlated with the historical profile to get a match and a starting location. Then the vehicle proceeds correlating the real time profile with the historical one so that an exact location on a specific track can be determined.

The present invention proposes to overcome these problems by providing from a first aspect, data logging apparatus comprising means for receiving a first signal with a parameter having a variable relationship with time excluding time itself; means for logging the parameter over a period of time; and means for logging data over a period of time. In addition, a reference apparatus is provided comprising means for receiving a second signal with a parameter having a variable relationship with time excluding time itself at a remote location to the data logging apparatus; and means for logging the parameter with respect to the real time, wherein the variable relationship of the parameter of the first and second signal with respect to real time is substantially the same. A means for correlating the logged parameter of the first signal and the logged data from the data logging apparatus with the logged parameter of the second signal is provided in order to determine the real time of the logged data. From a second aspect, a method for determining the real time of logged data is provided.

With this arrangement, it is possible to determine the real time in a data logging apparatus without the apparatus having to include an accurate real time clock. Only one parameter which is time varying is required and data can be logged against this time varying parameter The time varying parameter varies in an unpredicted fashion with respect to time but in substantially the same way with time across the data logging apparatus and reference apparatus.

Preferably, the first and second signal are an AC mains signal and the time varying parameter is frequency which is of a predetermined value in a particular country. For example, the mains frequency in the UK is taken to be 50 Hertz.

Accordingly, in a preferred embodiment, it is possible to obviate the need of a real time clock in a device which is used for data logging or event recording such as a utility meter. The data and/or event occurrence is logged along with the frequency of the time varying signal over a period of time in the utility meter and subsequently correlated with a frequency pattern which contains frequency data with respect to actual real time so as to determine when in real time the event occurred.

In order that the present invention be more readily understood, and embodiments thereof will be described with reference to the accompanying drawings in which:
Fig.1 shows a schematic view of the preferred embodiment of the present invention;
Fig. 2 shows a frequency pattern of a mains frequency grid with respect to actual time;
Fig. 3 shows the frequency pattern with a cut portion to indicate the cessation and commencement of mains supply in respect to the actual time; and
Fig. 4 shows a frequency pattern gathered as a result of frequency readings from a utility meter receiving a power supply from the mains frequency grid of Fig. 2.

The preferred embodiment will be described by reference to a utility meter which is connected to a mains supply and measures the consumption of a utility such as electricity. The mains supply comprises at least one parameter which is time varying and for electricity this can be the frequency. Therefore, the frequency signal which is being used for monitoring the occurrence of the event, is derived from the main supply signal which in any case is being monitored by the utility meter to determine the consumption of the electricity. The frequency signal is used to indicate the time or sequence of events. A reference unit which is located remote to the utility meter is fed with the same mains supply as the utility meter and the frequency varies in substantially the same way as in the utility meter. The reference unit contains a timing device which measures real time and the frequency is logged against the real time on a continuous basis to generate frequency variation pattern. Correlation of the record of the frequency between the reference unit and the utility meter is used to transfer the accurate time base, against which the reference unit has recorded the frequency, to the time base of the utility meter. This allows the real time of data logged and/or the occurrence of an event in the utility meter to be determined without requiring an accurate clock in the utility meter.

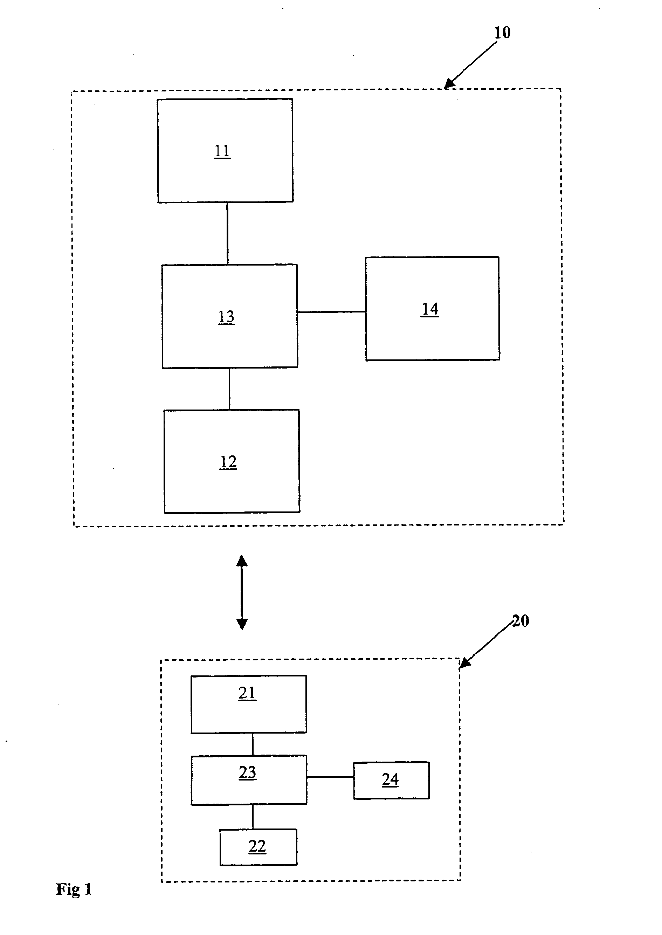

With reference to Figure 1 this shows a schematic diagram of the preferred embodiment of the invention and shows the features which would be found in a utility meter.

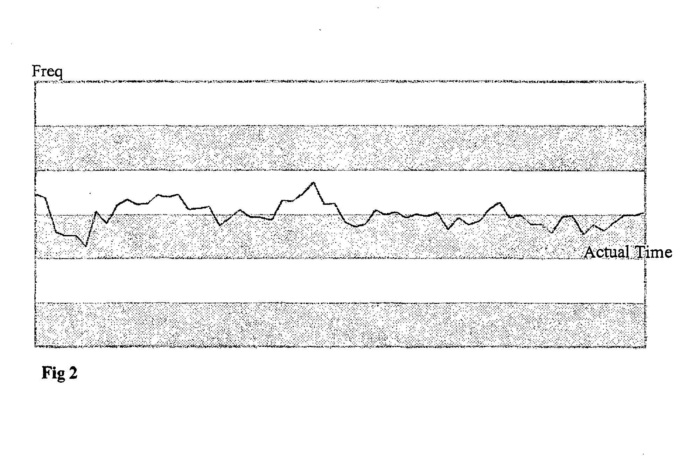

The utility meter 10 receives power from a mains power source 11 and the power source is considered a source of a signal with a reasonably stable and yet time varying frequency. For example, in the UK, the mains frequency is configured to remain stable at around 50Hz. The system frequency can vary around the 50 Hz target due to changes in demand but in the UK there are statutory obligations to maintain the frequency within +/- 0.5Hz around the 50Hz level. However, in practice the supply of electricity in the UK is generally within +/- 0.2Hz. An example of a mains frequency pattern showing the supply frequency with respect to actual time is shown in Fig. 2. As shown, the pattern varies in an unpredicted fashion with respect to time and is not exactly stable. The meter 10 does not contain an accurate time base but instead logs data with respect to a base that could be inaccurate, incomplete, discontinuous, with an unknown relationship with real time.

This supply frequency pattern of the main grid supply includes frequency readings that are gathered and plotted against the actual real time. As the frequency is the same at all points in the grid, this data can be gathered at only one point in the grid, for example, a reference unit 20 which can be in the form of a single utility meter, in an entire grid which will contain a real time clock but in any event is available at grid monitoring stations.

The utility meter 10 also comprises a conventional utility consumption means 12 which is in the form of a current transformer capable of detecting the consumption of the utility. The actual constitution of the detector 12 does not form part of the present invention and therefore will not be described in any further detail.

A control unit 13 is arranged to receive the frequency signal from the mains power source 11.

The meter 10 monitors the frequency signal over a period of time but not recording the time itself and stores at least a part of this in a storage unit 14. The frequency reading could be stored instantaneously (in practice averaged over part of a second), or averaged over a slightly longer (a few seconds) which would reduce instantaneous reading noise.

The detector 12 is arranged to monitor a meter parameter such as voltage and this is stored with the frequency being received by the control unit 13 from the mains power source 11. It is apparent that the time varying parameter which in this case is frequency and the meter parameter being logged which is voltage are derived from the same signal i.e. AC signal. Accordingly the variation of the voltage is known in relation to a variation pattern of the actual frequency and this is stored in the storage unit 14. The meter 10 therefore logs the meter parameter and the frequency rather than the accurate real time for which a real time clock is required. If this is shown in graph form, the two parameter readings would appear on the y-axis as superimposed graphs varying but not logged against real time itself. It will be appreciated that other meter parameters can be logged such as load patterns, and occurrence of specific events such as the detection of a tamper.

A reference unit 20 is arranged remote from the utility meter 10 and receives a mains signal from a mains power source 21. The mains power source 21 is derived from the same grid supply as the mains power source 11 which is fed to the utility meter 10. has an accurate knowledge of the real time with respect to the time varying parameter which is recorded by the utility meter 10.

The reference unit 20 also records the same time varying parameter which is recorded in the utility meter 10 and comprises a memory 22 to record the data therein. In this case, the frequency is recorded.

A control unit 23 determines the frequency from the mains power source 21. In addition, the reference unit 20 comprises a real time clock 23 and this is used to record the frequency with respect to the real time. Thus the values of the frequency are received by the control unit 23 and the corresponding accurate time value is received from the real time clock 23 and the frequency is recorded against an accurate time value and stored in the memory 22. This can be later plotted to form a frequency plot which may have a pattern as shown in Fig 2.

When it comes to reading the meter, the data from the storage unit 14 of the utility meter is downloaded or sent to the reference unit 20 and the time at which this extraction takes place can be recorded by the reference unit 20 which is preferably located remote from the meter 10. If located remotely, the data could be obtained over a wireless path or over a wired medium such as a telephone line. Furthermore, the data may be encrypted prior to being sent to the reference unit 20.

Once all the data is downloaded to the reference unit 20, there will exist meter parameter data logged with respect supply frequency variation. In addition, there will exist a plot of frequency variation against the actual time as shown in Figure 2. These two patterns are compared and aligned such that the meter parameters are correlated with respect to the actual time. This allows the plotting of various meter parameters against the actual time without requiring an accurate real time clock in individual meters. The time base of the utility meter 10 is not altered after correlation but the accurate time base can be associated with the time base of the utility meter 10 so as to establish the changing relationship of the time base in the utility meter 10 to the accurate time base of the reference unit 20.

It will be appreciated that the frequency pattern in the utility meter 10 and the reference unit 20 may not be identical but will be substantially the same to such an extent that an adequate correlation can be carried out.

There may be a network of utility meters each being fed with the same mains power from the same grid supply and each may be detecting the same or different parameters with respect to frequency. Accordingly, the meters are not limited to detecting voltage. For example other data such as temperature and/or power may be detected by the utility meters. As long as at least one time varying parameter except time itself is logged by the utility meter, any further parameters can also be logged to subsequently determine the real time in the one or more utility meters.

The correlation does not need to be carried out in the reference unit 20 but can be carried out elsewhere for example in a data processing system (not shown) so the reference unit 20 can only be used to log the time varying parameter against the real time. The data from the utility meter 10 and the reference unit 20 can be then provided to the data processing system for correlation.

In addition, the reference unit 20 may record the correlating parameter more frequently than the utility meter 10. So for example it might record frequency every second. The utility meter 10 might record it every minute (as determined by its imperfect clock, which may be out by a time not a whole number of minutes - suppose it is 39 minutes 17 seconds slow) but by this means the frequencies logged by the utility meter can still be correlated against frequencies recorded by the reference unit 20, when a best match will be found against samples occurring 17 seconds after the true minute and 39 minutes after the time when the utility meter would have recorded for the samples using its own clock. The frequency of recording by the reference unit 20 should be suitable for the rate of variation of the time varying parameter. If the time varying parameter is barometric pressure for example it would not be necessary or useful to record the parameter every second.

As we are relying on the mains frequency it is possible for mains synchronisation to be lost typically when a power outage occurs. The invention can be modified to address this as explained below.

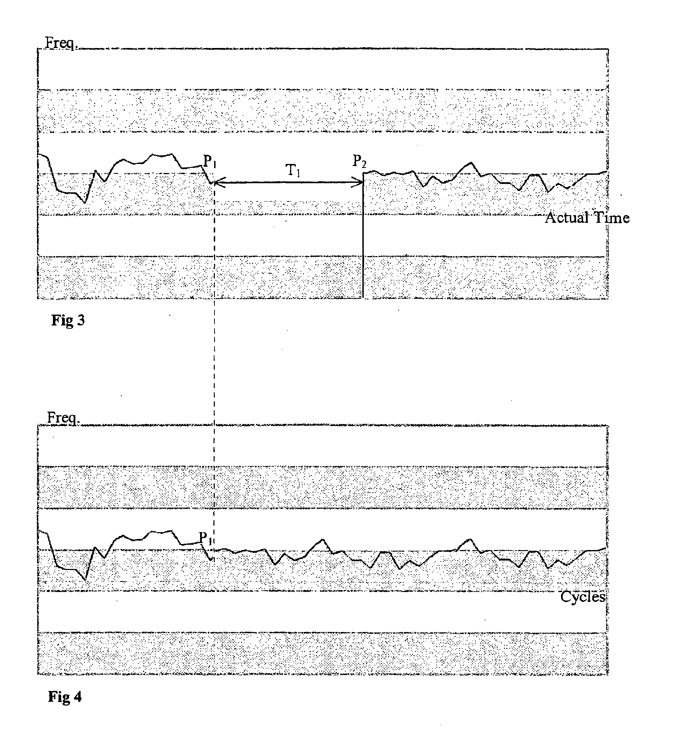

Fig.3 shows the period T₁ in the mains frequency pattern within which the power outage occurs. Point P₁ indicates the point on the frequency pattern when the power outage occurs and point P₂ shows when the power is restored on the actual time frequency pattern. It will be appreciated that the actual frequency at the mains supply does not stop but the figure shows for example purposes the period within which the power has ceased in an area where the utility meter 10 is situated.

Fig. 4 shows the frequency pattern of the utility meter 10 compared to the main power source pattern of Fig. 3. As shown, at point P₁ when such a power outage occurs, no frequency readings with respect to time are available as no frequency signal is received while the power is cut off. Instead the readings are stopped and only commenced once the power is resumed. Thus the frequency pattern is continuous in the utility meter 10. However, when a power outage occurs, the control unit 13 is arranged to store a discontinuity marker indicating that the frequency source has stopped. The frequency pattern which is held in the storage unit 14 therefore represents the frequency pattern immediately before the power outage at point P₁.

The storage unit 14 will recommence detection of the frequency once the power is restored and again store a discontinuity marker if another power outage occurs and repeat the process.

When it comes to reading the meter, the end point of the readings would be known as the extraction time of the data from the utility meter is recorded and the point of the readings would be known as the extraction time is recorded and the point of best correlation would give timestamps to all the frequency values back to a previous discontinuity marker.

Searching back before the time of the discontinuity marker would allow the previous section of data to be frequency correlated and hence time stamped and this can be repeated.

The meter is typically read a plurality of times during its lifetime and each reading can be searched back to the previous reading and this could be used as a further check to determine whether the time determined after searching back matches that when the previous reading was taken.

The data processing system can carry out analysis on the data and establish the time at which certain events had occurred. The only requirement for this to be accurate is for the initial time value to be known and this can be stored in the storage unit at the time of installation. The marker would indicate that the power outage had occurred and the restoration of power would be evident by referring to the frequency pattern which is used when the power is cut off.

It is apparent from the above that the storage unit will need to store the entire frequency log in the utility meter and this entire log is downloaded to the data processing system when a reading takes place. However, in a modification to the above it is possible to reduce the storage space required in the storage unit of the utility meter by setting a predetermined window of time i.e. a certain number of cycles. The frequency within this window is logged and if no event occurs during this window the data can be discarded and the frequency can be continuously monitored within this window. This type of FIFO system can be in the form of a shift register such that the storage unit 14 comprises a shift register to temporarily store the frequency pattern. Only when an event occurs does the frequency log of that particular window and subsequent window need to be stored in the storage unit 14 for subsequent correlation by the data processing system. On the occurrence of the event, the frequency log in the shift register is stored in semi-permanent memory that does not require battery backup such as FRAM or Flash memory. The data contained in the semi-permanent memory can be downloaded at the same time that a utility meter reading is taken from a utility provider and this data can be subsequently analysed in the data processing system. Further the memory can be reset once it has been downloaded by the utility provider. Accordingly by not having to store the entire frequency pattern the amount of data to be stored by the utility meter can be reduced. It will be appreciated that the window size can be altered to suit the conditions required.

In the case of the event being a power outage, the frequency pattern of the window within which the outage occurred is stored and also the pattern in the window when power is resumed is stored and these patterns are correlated with the main source at the data processing system to determine the real time of the event.

To determine whether a power outage has occurred or whether there has been a tamper, it is possible to compare the patterns in two or more different utility meters and determine whether the patterns are substantially the same in which case, it can be deduced that a power outage has occurred. The time can then be determined in the aforementioned manner by referring to the reference unit.

It is also conceivable to combine the two above possibilities such that the utility meter may store the entire frequency pattern but also store in a buffer, data within the window and only this window data (not the entire frequency pattern) is provided to the data processing system when an event occurs. This window data is correlated in order to determine the time and this is passed back to the control unit of the utility meter which carries out analysis of the entire frequency pattern to determine the actual time of the entire logged pattern.

Furthermore, the main grid supply frequency pattern may be sent to the utility meter so that the correlation between the frequency pattern detected by the utility meter and the frequency pattern from the recording unit may be performed in the utility meter instead of in the recording unit. Moreover, the functionality of the reference unit may be incorporated into at least one utility meter such that in a network of utility meters, one utility meter would contain a real time clock and monitor frequency and utility consumption against real time and the remaining meters would only log utility consumption.

It will be appreciated that this arrangement could be used for any sort of data logging or event recording application where it is necessary or acceptable to establish the time of an event after the event has occurred rather than at the time itself. Therefore it is not limited to utility meters.

A plurality of different time varying parameters could be used if available to increase the reliability or scope of the correlation process. Similarly, more than one reference unit may be used to increase reliability.

Further, the invention may be applied to other types of meters as long as the meters have at least one time varying parameter which is common to all the meters using the invention. For example, another time varying parameter which could be used is barometric pressure. In this case, the reference unit would record frequency and barometric pressure against real time at a first location sufficiently close to a second location where a gas meter is located such that the barometric pressure is similar at both locations. At the second location where the gas meter is located, the barometric pressure and gas consumption would be recorded and at a third location an electricity meter would record the frequency and the electricity consumption. The frequency would then be used to establish the correspondence of the real time of the electricity meter and the barometric pressure would be used to establish the correspondence of the real time of the gas meter.

## Claims

1. System for determining the real time of logged data comprising:
data logging apparatus (10) comprising means (13) for receiving a first signal with a parameter having a variable relationship with time excluding time itself; means (14) for logging the parameter over a period of time; and means for logging data over a period of time; and
reference apparatus (20) comprising means for receiving a second signal with a parameter having a variable relationship with time excluding time itself at a remote location to the data logging apparatus; and means (22) for logging the parameter with respect to the real time, wherein the variable relationship of the parameter of the first and second signal with respect to real time is substantially the same,
the system further comprising means (23) for correlating the logged parameter of the first signal and the logged data from the data logging apparatus with the logged parameter of the second signal in order to determine the real time of the logged data.

2. The system of claim 1 wherein data logging means is adapted to log data representative of the occurrence of one or more event(s).

3. The system of claim 1 or 2 wherein the first and second received signal is an AC mains signal and the parameter of the first and second signal is the frequency of the signals.

4. The system of any preceding claim wherein the data logging apparatus is adapted to log the time varying parameter at a different rate to the time varying parameter logged by the reference unit.

5. The system of any preceding claim wherein the data logging apparatus further comprises means (12) for detecting the consumption of a utility, and the data logging means is adapted to log the consumption of the utility with respect to the time varying parameter of the first signal.

6. The system of claim 5 wherein the consumption is detected from the received first signal.

7. The system of any of claims 2 to 6 wherein the data logging apparatus further comprises a first storage means for temporarily storing the logged data from the data logging means and a second storage means for receiving the data from the first storage means at the occurrence of the event, and storing the data.

8. The system of any preceding claim wherein the logged data in the data logging means is adapted to be cryptographically protected.

9. The system of any preceding claim comprising a plurality of the data logging apparatus positioned at different locations, wherein time varying parameter is common to each data logger.

10. The system of any preceding claim comprising a plurality of the reference apparatus, wherein the correlating means is adapted to correlate the logged parameter of the first signal and the logged data from the data logging apparatus with the logged parameter of the second signal from one or more of the plurality of reference apparatus in order to determine the real time of the logged data.

11. The system of any preceding claim wherein a plurality of different time varying parameters having a variable relationship with time excluding time itself are logged in the data logging apparatus, and the plurality of different time varying parameters having a variable relationship with time excluding time itself are logged in the reference apparatus with respect to real time.

12. Method for determining the real time of logged data comprising:
receiving a first signal with a parameter having a variable relationship with time excluding time itself in a data logging apparatus and logging the parameter over a period of time;
logging data in the data logging apparatus over a period of time;
receiving a second signal with a parameter having a variable relationship with time excluding time itself at a remote location to the data logging apparatus, and logging the parameter with respect to the real time, wherein the variable relationship of the parameter of the first and second signal with respect to real time is substantially the same; and
correlating the logged parameter of the first signal and the logged data from the data logging apparatus with the logged parameter of the second signal in order to determine the real time of the logged data.

13. A utility meter comprising a data logging apparatus for use in the system according to claim 1.

## Patentansprüche

1. System zur Ermittlung der Echtzeit erfasster Daten, umfassend:
eine Datenerfassungsvorrichtung (10), die ein Mittel (13) zum Empfangen eines ersten Signals mit einem Parameter, der ein variables Verhältnis zur Zeit hat, ausschließlich der Zeit selbst, ein Mittel (14) zum Erfassen des Parameters über einen Zeitraum und ein Mittel zum Erfassen von Daten über einen Zeitraum aufweist, und
eine Referenzvorrichtung (20), die ein Mittel zum Empfangen eines zweiten Signals mit einem Parameter, der ein variables Verhältnis zur Zeit hat, ausschließlich der Zeit selbst an einem von der Datenerfassungsvorrichtung fernen Ort und ein Mittel (22) zum Erfassen des Parameters in Bezug auf die Echtzeit aufweist, wobei das variable Verhältnis des Parameters des ersten und des zweiten Signals in Bezug auf die Echtzeit im Wesentlichen das gleiche ist,
wobei das System ferner ein Mittel (23) aufweist zur Korrelation des erfassten Parameters des ersten Signals und der erfassten Daten von der Datenerfassungsvorrichtung mit dem erfassten Parameter des zweiten Signals, um die Echtzeit der erfassten Daten zu ermitteln.

2. System nach Anspruch 1, wobei die Datenerfassungsvorrichtung zum Erfassen von Daten ausgeführt ist, die für das Stattfinden von einem oder mehreren Ereignis(sen) repräsentativ sind.

3. System nach Anspruch 1 oder 2, wobei das erste und das zweite empfangene Signal ein Wechselspannungsnetzsignal sind und der Parameter des ersten und des zweiten Signals die Frequenz des Signals ist.

4. System nach einem der vorhergehenden Ansprüche, wobei die Datenerfassungsvorrichtung zum Erfassen des zeitvariablen Parameters mit einer anderen Rate als den von der Referenzeinheit erfassten zeitvariablen Parameter ausgeführt ist.

5. System nach einem der vorhergehenden Ansprüche, wobei die Datenerfassungsvorrichtung ferner ein Mittel (12) zum Erkennen des Verbrauchs eines Versorgungsunternehmens aufweist und die Datenerfassungsvorrichtung zum Erfassen des Verbrauchs des Versorgungsunternehmens in Bezug auf den zeitvariablen Parameter des ersten Signals ausgeführt ist.

6. System nach Anspruch 5, wobei der Verbrauch aus dem empfangenen ersten Signal erkannt wird.

7. System nach einem der Ansprüche 2 bis 6, wobei die Datenerfassungsvorrichtung ferner eine erste Speichereinrichtung zur vorübergehenden Speicherung der erfassten Daten von der Datenerfassungsvorrichtung und eine zweite Speichereinrichtung zum Empfangen der Daten von der ersten Speichereinrichtung bei Vorkommen eines Ereignisses und zum Speichern der Daten aufweist.

8. System nach einem der vorhergehenden Ansprüche, wobei die erfassten Daten in der Datenerfassungsvorrichtung dafür ausgelegt sind, kryptographisch geschützt zu werden.

9. System nach einem der vorhergehenden Ansprüche, das eine Vielzahl der Datenerfassungsvorrichtungen aufweist, die an verschiedenen Orten positioniert sind, wobei der zeitvariable Parameter jedem Datenlogger gemeinsam ist.

10. System nach einem der vorhergehenden Ansprüche, das eine Vielzahl der Referenzvorrichtungen aufweist, wobei das Korrelationsmittel zur Korrelation des erfassten Parameters des ersten Signals und der erfassten Daten von der Datenerfassungsvorrichtung mit dem erfassten Parameter des zweiten Signals von einer oder mehreren der Vielzahl von Referenzvorrichtungen ausgeführt ist, um die Echtzeit der erfassten Daten zu ermitteln.

11. System nach einem der vorhergehenden Ansprüche, wobei eine Vielzahl von verschiedenen zeitvariablen Parametern, die ein variables Verhältnis zur Zeit haben, ausschließlich der Zeit selbst in der Datenerfassungsvorrichtung erfasst wird und die Vielzahl von verschiedenen zeitvariablen Parametern, die ein variables Verhältnis zur Zeit haben, ausschließlich der Zeit selbst in der Referenzvorrichtung in Bezug auf die Echtzeit erfasst wird.

12. Verfahren zum Ermitteln der Echtzeit erfasster Daten, umfassend:
Empfangen eines ersten Signals mit einem Parameter, der ein variables Verhältnis zur Zeit hat, ausschließlich der Zeit selbst in einer Datenerfassungsvorrichtung und Erfassen der Parameter über einen Zeitraum,
Erfassen von Daten in einer Datenerfassungsvorrichtung über einen Zeitraum,
Empfangen eines zweiten Signals mit einem Parameter, der ein variables Verhältnis zur Zeit hat, ausschließlich der Zeit selbst an einem von der Datenerfassungsvorrichtung fernen Ort und Erfassen des Parameters in Bezug auf die Echtzeit, wobei das variable Verhältnis des Parameters des ersten und des zweiten Signals in Bezug auf die Echtzeit im Wesentlichen das gleiche ist, und
Korrelieren des erfassten Parameters des ersten Signals und der erfassten Daten von der Datenerfassungsvorrichtung mit dem erfassten Parameter des zweiten Signals, um die Echtzeit der erfassten Daten zu ermitteln.

13. Energiezähler, umfassend eine Datenerfassungsvorrichtung zur Verwendung in dem System nach Anspruch 1.

## Revendications

1. Système de détermination du temps réel de données consignées comprenant :
un appareil de consignation de données (10) comprenant un moyen (13) pour recevoir un premier signal ayant un paramètre à relation variable avec le temps excluant le temps lui-même ; un moyen (14) pour consigner le paramètre durant une période de temps ; et un moyen pour consigner des données durant une période de temps ; et
un appareil de référence (20) comprenant un moyen pour recevoir un second signal ayant un paramètre à relation variable avec le temps excluant le temps lui-même à un emplacement distant de l'appareil de consignation de données ; et un moyen (22) pour consigner le paramètre relativement au temps réel, la relation variable du paramètre des premier et second signaux par rapport au temps réel étant sensiblement la même,
le système comprenant en outre un moyen (23) pour corréler le paramètre consigné du premier signal et les données consignées provenant de l'appareil de consignation de données avec le paramètre consigné du second signal afin de déterminer le temps réel des données consignées.

2. Système selon la revendication 1, dans lequel un moyen de consignation de données est adapté pour consigner des données représentatives de l'occurrence d'un ou de plusieurs événements.

3. Système selon la revendication 1 ou 2, dans lequel les premier et second signaux reçus sont un signal de secteur C.A. et le paramètre des premier et second signaux est la fréquence des signaux.

4. Système selon l'une quelconque des revendications précédentes, dans lequel l'appareil de consignation de données est adapté pour consigner le paramètre variant dans le temps à une vitesse différente de celle du paramètre variant dans le temps consigné par l'unité de référence.

5. Système selon l'une quelconque des revendications précédentes, dans lequel l'appareil de consignation de données comprend en outre un moyen (12) pour détecter la consommation d'un service public, et le moyen de consignation de données est adapté pour consigner la consommation du service public relativement au paramètre variant dans le temps du premier signal.

6. Système selon la revendication 5, dans lequel la consommation est détectée à partir du premier signal reçu.

7. Système selon l'une quelconque des revendications 2 à 6, dans lequel l'appareil de consignation de données comprend en outre un premier moyen de mémorisation pour mémoriser temporairement les données consignées provenant du moyen de consignation de données et un second moyen de mémorisation pour recevoir les données provenant du premier moyen de mémorisation à l'occurrence de l'événement, et mémoriser les données.

8. Système selon l'une quelconque des revendications précédentes, dans lequel les données consignées dans le moyen de consignation de données sont adaptées pour être protégées cryptographiquement.

9. Système selon l'une quelconque des revendications précédentes, comprenant une pluralité d'appareils de consignation de données positionnés à différents emplacement, le paramètre variant dans le temps étant commun à chaque dispositif de consignation de données.

10. Système selon l'une quelconque des revendications précédentes, comprenant une pluralité d'appareils de référence, dans lequel le moyen de corrélation est adapté pour corréler le paramètre consigné du premier signal et les données consignées provenant de l'appareil de consignation de données au paramètre consigné du second signal provenant d'un ou de plusieurs de la pluralité d'appareils de référence afin de déterminer le temps réel des données consignées.

11. Système selon l'une quelconque des revendications précédentes, dans lequel une pluralité de différents paramètres variant dans le temps ayant une relation variable avec le temps sauf le temps lui-même est consignée dans l'appareil de consignation de données, et la pluralité de différents paramètres variant dans le temps ayant une relation variable avec le temps sauf le temps lui-même est consignée dans l'appareil de référence par rapport au temps réel.

12. Procédé de détermination du temps réel de données consignées comprenant :
la réception d'un premier signal ayant un paramètre à relation variable avec le temps excluant le temps lui-même dans un appareil de consignation de données et la consignation du paramètre durant une période de temps ; et
la consignation de données dans l'appareil de consignation de données durant une période de temps ;
la réception d'un second signal ayant un paramètre à relation variable avec le temps excluant le temps lui-même à un emplacement distant de l'appareil de consignation de données, et la consignation du paramètre relativement au temps réel, la relation variable du paramètre des premier et second signaux par rapport au temps réel étant sensiblement la même ; et
la corrélation du paramètre consigné du premier signal et des données consignées provenant de l'appareil de consignation de données avec le paramètre consigné du second signal afin de déterminer le temps réel des données consignées.

13. Compteur de services publics comprenant un appareil de consignation de données destiné à être utilisé dans le système selon la revendication 1.
